# EUROPÄISCHE PATENTANMELDUNG

(11) **EP 3 709 110 A1**
(43) Veröffentlichungstag der Anmeldung: **16.09.2020**
(21) Anmeldenummer: 19162798.3
(22) Anmeldetag: 14.03.2019
(51) Int. Cl.: G05B 19/418

(54) **VERFAHREN ZUR STEUERUNG EINES PRODUKTIONSPROZESSES ZUR HERSTELLUNG VON BAUTEILEN**

(71) Anmelder: GKN Sinter Metals Engineering GmbH, 42477 Radevormwald (DE)
(72) Erfinder: Oberparleiter, Peter, 39031 Bruneck (BZ) (IT)
(74) Vertreter: Rössler, Matthias

(57) **Zusammenfassung**

Verfahren zur Steuerung eines Produktionsprozesses zur Herstellung von Bauteilen, wobei die Bauteile oder eine zur Herstellung der Bauteile verwendete Fertigungseinrichtung zumindest ein messtechnisch erfassbares erstes Merkmal aufweisen; zumindest aufweisend die folgenden Schritte:
a) Festlegen eines Prüfplans zur Erfassung des ersten Merkmals mit einem ersten Wert einer ersten Prüffrequenz, wobei für das erste Merkmal zumindest ein erstes Stabilitätskriterium definiert ist;
b) Herstellen der Bauteile und paralleles Durchführen des Prüfplans, wobei das erste Merkmal in der ersten Prüffrequenz geprüft wird;
c) Auswerten der Prüfergebnisse;
d) Verändern der ersten Prüffrequenz, wobei die erste Prüffrequenz gesteigert wird, wenn mindestens ein Prüfergebnis für das erste Merkmal das erste Stabilitätskriterium verletzt; wobei die erste Prüffrequenz verringert wird, wenn sich alle Prüfergebnisse im Einklang mit dem ersten Stabilitätskriterium befinden.

## Beschreibung

Die vorliegende Erfindung betrifft ein Verfahren zur Steuerung eines Produktionsprozesses zur Herstellung von Bauteilen.

Während der Produktion von Serienbauteilen werden regelmäßig verschiedene Qualitäts- und Prozessmessungen durchgeführt. Diese Messungen werden in der Regel stichprobenartig durchgeführt. Z. B. kann in gleichmäßigen zeitlichen Abständen an jeweils einer bestimmten Anzahl von Bauteilen ein bestimmtes Merkmal (z. B. ein Gewicht eines sintertechnisch hergestellten Bauteils) erfasst werden. Weitere Messungen betreffen z. B. andere Merkmale des Bauteils, z. B. eine Länge, eine Dichte, eine Parallelität von Oberflächen oder einen Durchmesser des Bauteils. Alternativ dazu oder zusätzlich können in zeitlichen Abständen auch Prozessparameter erfasst werden, etwa der Druckverlauf an einer Maschine während des Pressvorgangs bei der Herstellung sog. Grünlinge.

Durch eine rein statische Festlegung von Prüfintervallen wird auf die sich laufend ändernden Risiken, die sich in einem realen Prozess ergeben, nicht eingegangen. Im Falle von stabilen Prozessen, bei denen Bauteile mit konstant hoher Qualität produziert werden, werden daher meist zu viele Messungen durchgeführt. Dadurch werden vermeidbare Kosten verursacht. Bei instabilen Prozessen hingegen besteht die Gefahr, dass aufgrund einer zu geringen Anzahl von Messungen Fehler nicht hinreichend erkannt werden.

Hiervon ausgehend ist es Aufgabe der vorliegenden Erfindung, die mit Bezug auf den Stand der Technik geschilderten Probleme zumindest zu lindern oder gar zu lösen. Insbesondere soll ein Verfahren zur Steuerung eines Produktionsprozesses zur Herstellung von Bauteilen angegeben werden, bei dem ein Prüfaufwand in Abhängigkeit von einer Stabilität des Produktionsprozesses betrieben wird.

Zur Lösung dieser Aufgaben wird ein Verfahren gemäß den Merkmalen des Patentanspruchs 1 vorgeschlagen. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Es wird ein Verfahren zur Steuerung eines Produktionsprozesses zur Herstellung von Bauteilen vorgeschlagen. Bei diesem Verfahren weisen die Bauteile oder eine Fertigungseinrichtung zumindest ein messtechnisch erfassbares erstes Merkmal (z. B. ein Volumen, ein Gewicht, eine Dichte, eine Parallelität von Oberflächen oder einen Durchmesser des Bauteils; eine Temperatur, einen Druck, eine Leistungsaufnahme der Fertigungseinrichtung) auf. Das Verfahren umfasst zumindest die folgenden Schritte:
a) Festlegen eines Prüfplans zur Erfassung des ersten Merkmals mit einem ersten Wert einer ersten Prüffrequenz (z. B. in der Einheit [eine Prüfung je Anzahl Bauteile] oder [eine Prüfung je Zeitraum des Produktionsprozesses]); wobei für das erste Merkmal zumindest ein erstes Stabilitätskriterium definiert ist;
b) Herstellen der Bauteile und paralleles Durchführen des Prüfplans, wobei das erste Merkmal in der ersten Prüffrequenz geprüft wird;
c) Auswerten der (zumindest in einem definierten Zeitraum oder über eine definierte Anzahl von geprüften Bauteilen ermittelten) Prüfergebnisse;
d) Verändern der ersten Prüffrequenz, wobei
   - (entweder) die erste Prüffrequenz gesteigert wird, wenn mindestens ein Prüfergebnis für das erste Merkmal das erste Stabilitätskriterium verletzt;
   - (oder) die erste Prüffrequenz verringert wird, wenn sich alle Prüfergebnisse im Einklang mit dem ersten Stabilitätskriterium befinden.

Ein Produktionsprozess umfasst die Herstellung eines Bauteils, z. B. die sintertechnische Herstellung eines Bauteils. Dabei wird z. B. ein pulverförmiger Werkstoff bereitgestellt, zu einem Grünling verpresst und anschließend sintertechnisch (also thermisch) behandelt. Ggf. kann eine spanende Bearbeitung vorgenommen werden. Im Rahmen des Produktionsprozesses werden insbesondere eine Vielzahl (z. B. mindestens 100, 1.000, oder mehrere 10.000) von zueinander idealerweise identischen Bauteilen hergestellt.

Als zu erfassendes (erstes) Merkmal kann z. B. ein Gewicht eines sintertechnisch hergestellten Bauteils erfasst werden oder z. B. eine Länge, eine Dichte, eine Parallelität von Oberflächen oder ein Durchmesser des Bauteils. Weiter kann als Merkmal auch ein Grat definiert sein oder eine Erscheinung einer Oberfläche des Bauteils, z. B. matt oder glänzend, etc. Ebenso kann ein Merkmal einer Fertigungseinrichtung, z. B. ein anliegender Druck oder eine Leistungsaufnahme, erfasst werden.

Der erste Wert der ersten Prüffrequenz kann z. B. einen Ausgangswert für einen neu gestarteten Produktionsprozess des Bauteils bzw. der Bauteile darstellen. Dieser Wert kann z. B. eine Prüfung an einem Bauteil je 1.000 Bauteile oder eine Prüfung einer Stichprobe von mehreren Bauteilen (z. B. an fünf unmittelbar nacheinander hergestellten Bauteilen) je 1.000 Bauteile oder Ähnliches umfassen. Alternativ oder gleichzeitig kann die erste Prüffrequenz in Abhängigkeit von einem Zeitraum des Produktionsprozesses festgelegt werden. Dann kann z. B. ein Merkmal einer Fertigungseinrichtung erfasst werden, oder eine Prüfung (an einem oder mehreren Bauteilen) je einer Stunde des Produktionsprozesses erfolgen. Ggf. kann dabei die Anzahl von Bauteilen, die in dem Zeitraum produziert wurden bzw. einen festgelegten Bearbeitungsschritt durchlaufen haben, berücksichtigt werden.

Die Prüfergebnisse können aus der Beurteilung jeweils nur eines einzelnen Wertes oder aber jeweils mehrerer Werte ermittelt sein. Die Auswertung bzw. Beurteilung mehrerer Werte kann sich auf mathematische Methoden stützen, z. B. Mittelwertbildung und/oder die Standardabweichung innerhalb einer Stichprobe.

Ein Stabilitätskriterium kann als eine definierte Abweichung von einem Sollwert für das erste Merkmal festgelegt_werden. Dabei muss das Stabilitätskriterium insbesondere nicht einer erlaubten Toleranz für den Sollwert entsprechen. Insbesondere ist die Toleranz weiter gefasst als das Stabilitätskriterium. Dementsprechend wäre etwa ein Bauteil nicht dann schon fehlerhaft, wenn das erste Merkmal das Stabilitätskriterium verletzt (und damit ggf. noch innerhalb der Toleranz liegt).

Insbesondere kann auch vorgesehen sein, dass eine Verletzung des Stabilitätskriteriums von einer Methode abhängt, mit der z. B. eine während einer Prüfung überprüfte Stichprobe an Bauteilen ausgewertet wird.

Beispielsweise kann eine Anzahl als Teilmenge der Bauteile einer Stichprobe (die Stichprobe umfasst z. B. fünf Bauteile) definiert sein, ab der auf Verletzung des Stabilitätskriteriums erkannt wird. Es müssen also eine Mindestanzahl an Bauteilen einer Stichprobe (also z. B. mindestens zwei Bauteile der Stichprobe von fünf Bauteilen) z. B. eine bestimmte Mindestabweichung von einem Nennwert des ersten Merkmals aufweisen, wobei erst dann auf eine Verletzung des Stabilitätskriteriums erkannt wird.

Über die Verletzung des Stabilitätskriteriums wird insbesondere eine Prozessinstabilität erkennbar, so dass durch einen korrigierenden Eingriff in den Produktionsprozess ein mögliches bevorstehendes Nichteinhalten der Toleranz verhindert werden kann.

Insbesondere wird das Herstellen der Bauteile und das Durchführen des Prüfplans, also die Durchführung von Messungen des ersten Merkmals, zeitlich parallel zueinander durchgeführt.

Gemäß Schritt c) erfolgt die Auswertung der Prüfergebnisse, also der Messungen zumindest des ersten Merkmals.

Gemäß Schritt d) wird die erste Prüffrequenz (die dem ersten Merkmal zugeordnet ist) verändert, also der erste Wert der ersten Prüffrequenz auf einen anderen zweiten Wert der ersten Prüffrequenz eingestellt. Dabei wird die erste Prüffrequenz gesteigert, wenn z. B. mindestens ein Prüfergebnis für das erste Merkmal das erste Stabilitätskriterium verletzt. Andererseits wird die erste Prüffrequenz verringert, wenn sich alle Prüfergebnisse im Einklang mit dem ersten Stabilitätskriterium befinden.

Hier wird also vorgeschlagen, dass wenn der Produktionsprozess stabil läuft (und die Prüfergebnisse zumindest zum ersten Merkmal keine größere Abweichung aufweisen, also Prüferergebnisse im Einklang mit dem Stabilitätskriterium sind), die erste Prüffrequenz reduziert werden kann.

Wenn eine mögliche Instabilität des Produktionsprozesses erkannt wird (d. h. z. B. mindestens ein Prüfergebnis zumindest zum ersten Merkmal weist eine größere Abweichung auf, das Prüferergebnis verletzt also das Stabilitätskriterium), kann die erste Prüffrequenz gesteigert werden.

In der industriellen Serienfertigung werden zur Beurteilung der Stabilität des Produktionsprozesses von Bauteilen statistische Messmethoden (SPC; statistische Prozesskontrolle) angewandt. Hierzu wird ein umfangreicher Prüfplan generiert, welcher für alle relevanten Qualitäts- und Prozessmerkmale die Prüffrequenz dauerhaft festlegt. Mit dem hier vorgeschlagenen Ansatz wird eine Dynamisierung der Prüffrequenzen vorgeschlagen. Dazu kann die Prüffrequenz für ein Merkmal laufend auf Basis der Stabilität des Produktionsprozesses angepasst werden. Für stabile Produktionsprozesse wird die Prüffrequenz immer weiter reduziert, sofern vorher definierte Stabilitätskriterien eingehalten werden.

Der Fachmann wird beispielweise eine sogenannte Eingriffsgrenze, eine Toleranzgrenze, oder eine Stabilitätsgrenze zur Definition eines Stabilitätskriteriums heranziehen. Liegen also die Prüfergebnisse des zu prüfenden Merkmals innerhalb der definierten Grenzen, wird die Prüffrequenz sukzessive reduziert.

Im umgekehrten Fall wird die Prüffrequenz erhöht, sobald die Prüfergebnisse des zu prüfenden Merkmals außerhalb definierter Grenzen liegen, da diese Grenzüberschreitung ein höheres Qualitätsrisiko für das Bauteil anzeigt.

Unter stabilen Bedingungen des Produktionsprozesses können Messungen von zu prüfenden Merkmalen damit auf ein Minimum reduziert und dennoch eine hohe Güte der produzierten Bauteile garantiert werden.

Insbesondere auf Basis von einer computergestützten Messwerterfassung und Messwertregistrierung können Prüfergebnisse laufend analysiert und dahingehend beurteilt werden, ob der Produktionsprozess stabil ist oder ob Eingriffe in den Produktionsprozess erforderlich sind.

Auf Basis der durchgeführten Messungen und der daraus resultierenden Prüfergebnisse ist es insbesondere möglich, einen Trend in der Veränderung eines Merkmals (z. B. ein Gewicht oder eine Höhe) zu erfassen. Falls die Prüfergebnisse über einen definierten Zeitraum oder über eine bestimmte Anzahl von Stichproben hinweg innerhalb definierter Grenzen liegen (das Stabilitätskriterium erfüllen), kann daraus geschlossen werden, dass der Prozess für das betroffene geprüfte Merkmal stabil verläuft und die Prüffrequenz daher reduziert werden. Diese Reduzierung kann auch stufenweise erfolgen und im Idealfall kann die Prüffrequenz auf ein definiertes Minimum gesetzt werden.

Sollten jedoch bei einer Prüfung ein oder mehrere Prüfergebnisse mindestens ein Stabilitätskriterium verletzen, deutet dies auf einen instabilen Produktionsprozess hin und die Prüffrequenz wird erhöht und damit der Produktionsprozess stärker überwacht. Parallel kann ein Eingriff in den Produktionsprozess durchgeführt werden, um die Prozessstabilität wiederherzustellen, einschließlich der Ausschleusung mutmaßlich fehlerhafter Bauteile. Die höhere Prüffrequenz gewährleistet, dass der Produktionsprozess für einen definierten Zeitraum stärker überwacht wird. Erst wenn die Prüfergebnisse über einen definierten Zeitraum oder über eine bestimmte Anzahl von Stichproben bzw. Bauteilen hinweg das mindestens eine Stabilitätskriterium erfüllen, kann die Prüffrequenz wieder stufenweise reduziert werden.

Der Zustand eines einzelnen Merkmals des Bauteils kann z. B. auf Basis der im Prüfplan definierten Prüffrequenz in einem Prozessschritt überwacht werden. Falls sich das Prüfergebnis für eine vorher definierte Zeit bzw. Anzahl von Stichproben innerhalb vorher definierter Grenzen befindet, kann die Prüffrequenz im ersten Schritt z. B. halbiert werden, also z. B. auf 50 % eines vorher eingehaltenen Werts einer Prüffrequenz. Sollte das mindestens eine Stabilitätskriterium verletzt werden, kann die Prüffrequenz des Merkmals im ersten Schritt z. B. auf den doppelten Wert der aktuellen Prüfplanvorgabe gesetzt werden, also z. B. auf 200 % eines vorher eingehaltenen Werts der Prüffrequenz. Falls anschließend die Prüfergebnisse dieses Merkmals für eine vorher definierte Zeit bzw. Anzahl von Stichproben das mindestens eine, vorher definierte Stabilitätskriterium erfüllen, kann die Prüffrequenz stufenweise auf die Standardvorgabe (also den ursprünglichen Wert der Prüffrequenz) und später wieder auf den halben Wert der Prüfplanvorgabe geändert werden. Sollten Prüfergebnisse jedoch weiterhin das mindestens eine Stabilitätskriterium verletzen, wird die doppelte Prüffrequenz beibehalten oder sogar bis zu einer 100% Prüfung (also jedes Bauteils bzw. fortwährender Prozessparametererfassung) erhöht.

Insbesondere ist es möglich, Bauteile in Abhängigkeit von den Prüfergebnissen auszusondern und z. B. einer Nacharbeit zuzuführen oder ggf. als Ausschuss zu deklarieren.

Somit können sich in einem ersten Schritt drei Zustände für die Prüffrequenz ergeben:
(1) Reduzierte Prüffrequenz: die Prüfung erfolgt z. B. mit halber Prüffrequenz gegenüber einer Prüfplanvorgabe;
(2) Standard Prüffrequenz: die Prüfung erfolgt (weiter) mit der Prüffrequenz gemäß Prüfplanvorgabe;
(3) Verschärfte Prüffrequenz: die Prüfung erfolgt z. B. mit doppelter Prüffrequenz gegenüber der Prüfplanvorgabe.

Insbesondere erfolgt die Verringerung oder Steigerung der Prüffrequenz auf jeweils definierte Werte der ersten Prüffrequenz stufenweise, also z. B. auf jeweils mindestens 130 % oder höchstens 70 % eines vorhergehenden Wertes der Prüffrequenz.

Insbesondere erfolgt die Steigerung der ersten Prüffrequenz in größeren Stufen als die Verringerung der ersten Prüffrequenz. Insbesondere wird unabhängig von einer gerade vorliegenden Prüffrequenz (wenn diese geringer ist als der ursprüngliche erste Wert) die erste Prüffrequenz auf einen höheren Wert als den ursprünglichen ersten Wert eingestellt.

Bevorzugt erfolgt die Verringerung der ersten Prüffrequenz in größeren Stufen als die Steigerung der ersten Prüffrequenz.

Insbesondere erfolgt die Verringerung oder Steigerung in voneinander unterschiedlichen (also bei Verringerung in anderen Stufen als bei Steigerung) und sich verändernden Stufen (also bei weiterer Verringerung oder weiterer Steigerung jeweils in dann größeren oder kleineren Stufen).

Eine Veränderung der Prüffrequenz, z. B. die Verdopplung oder Halbierung der Prüffrequenz, kann insbesondere auf weitere bzw. alle messtechnisch erfassbaren und durch den Prüfplan zur messtechnischen Erfassung vorgesehenen Merkmale des Bauteils oder der Fertigungseinrichtung (ggf. nur Merkmale, die in einem identischen Prozessschritt des Produktionsprozesses vorliegen) angewandt werden. Insbesondere kann dabei angenommen werden, dass die Prüfmerkmale voneinander unabhängig sind und somit die Prüffrequenz allein auf Basis der vorher ermittelten Daten des jeweiligen Prüfmerkmals angepasst wird.

Eine Veränderung der Prüffrequenz, z. B. die Verdopplung oder Halbierung der Prüffrequenz, kann insbesondere auf weitere bzw. alle Prüfmerkmale und ggf. andere oder alle Prozessschritte des Produktionsprozesses angewandt werden.

Insbesondere wird am Anfang eines Produktionsprozesses eine 100 %-Prüfung (also Prüfung jedes Bauteils) vorgenommen und dann bei Vorliegen der Voraussetzungen die Prüffrequenz sukzessive reduziert.

Insbesondere umfasst die Herstellung des Bauteils eine Mehrzahl von Prozessschritten, wobei das erste Merkmal nach einem ersten Prozessschritt vorliegt und geprüft wird und wobei (ein messtechnisch erfassbares) zweites Merkmal nach einem, dem ersten Prozessschritt zeitlich nachfolgenden zweiten Prozessschritt vorliegt.

Auf Basis der Prüfergebnisse kann die Prüffrequenz sukzessive reduziert werden, falls die jeweiligen Prüfergebnisse des Merkmals lange genug das mindestens eine Stabilitätskriterium erfüllen. Die Reduzierung der Prüffrequenz kann nicht nur einmalig, sondern mehrfach, ggf. in Stufen, bis auf ein definiertes Minimum erfolgen.

Sollte das mindestens eine Stabilitätskriterium verletzt werden (also z. B. mindestens ein Prüfergebnis z. B. außerhalb einer Eingriffsgrenze liegen), kann die Prüffrequenz für das Merkmal erhöht werden, z. B. auf den doppelten Wert der Prüfplanvorgabe (also des ursprünglichen Wertes der Prüffrequenz) gesetzt werden, und ggf. ein Eingriff in den Produktionsprozess vorgenommen werden, um die Stabilität des Produktionsprozesses wiederherzustellen. Falls anschließend die Prüfergebnisse dieses Merkmals für eine vorher definierte Zeit bzw. Anzahl von Stichproben das mindestens eine, vorher definierte Stabilitätskriterium erfüllen, kann die Prüffrequenz wieder reduziert werden, z. B. auf die Standardvorgabe laut Prüfplan (also auf den ursprünglichen Wert) gesetzt werden, und anschließend wiederum sukzessive reduziert werden. Sollten Prüfergebnisse jedoch weiterhin das mindestens eine Stabilitätskriterium verletzen, kann eine erhöhte, ggf. also z. B. die doppelte Prüffrequenz, beibehalten werden.

Insbesondere erfolgt die Verringerung der Prüffrequenz nur bis zu einem definierten Minimum einer Prüffrequenz, die nicht null beträgt.

Insbesondere wird die Prüffrequenz nicht sukzessive halbiert oder verdoppelt, sondern der Grad der Änderung wird für jedes geprüfte bzw. zu prüfende Merkmal und jeden Prozessschritt des Produktionsprozesses individuell auf Basis der Stabilität des Produktionsprozesses und ggf. der besonderen Bedeutung des Merkmals festgelegt. Daraus kann ein vollständig variabel modulierbares Prüfintervall entwickelt werden.

Für die Dynamisierung von Prüffrequenzen können historische Messdaten von vorherigen Produktionsaufträgen verwendet werden. Damit kann die dynamische Anpassung der Prüffrequenz (Erhöhung bzw. Verringerung) bereits bei Auftragsbeginn erfolgen bzw. eingeleitet werden, sofern die historischen Messdaten eine Dynamisierung implizieren bzw. als sinnvoll erscheinen lassen.

Insbesondere liegen zwischen solchen unterschiedlichen (also vorherigen oder anderen) Produktionsprozessen bzw. Produktionsaufträgen Zeitintervalle, in denen z. B. eine Umrüstung der Werkzeuge zur Herstellung des Bauteils erfolgte oder in denen andere Bauteile hergestellt wurden.

Es wird weiter eine Vorrichtung zur Datenverarbeitung vorgeschlagen, umfassend einen Prozessor, der so konfiguriert ist, dass er das beschriebene Verfahren durchführt.

Vorsorglich sei angemerkt, dass die hier verwendeten Zahlwörter ("erste", "zweite", "dritte", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

## Patentansprüche

1. Verfahren zur Steuerung eines Produktionsprozesses zur Herstellung von Bauteilen, wobei die Bauteile oder eine zur Herstellung der Bauteile verwendete Fertigungseinrichtung zumindest ein messtechnisch erfassbares erstes Merkmal aufweisen; zumindest aufweisend die folgenden Schritte:
a) Festlegen eines Prüfplans zur Erfassung des ersten Merkmals mit einem ersten Wert einer ersten Prüffrequenz; wobei für das erste Merkmal zumindest eine erstes Stabilitätskriterium definiert ist;
b) Herstellen der Bauteile und paralleles Durchführen des Prüfplans, wobei das erste Merkmal in der ersten Prüffrequenz geprüft wird;
c) Auswerten der ermittelten Prüfergebnisse;
d) Verändern der ersten Prüffrequenz, wobei die erste Prüffrequenz gesteigert wird, wenn mindestens ein Prüfergebnis für das erste Merkmal das erste Stabilitätskriterium verletzt; wobei die erste Prüffrequenz verringert wird, wenn sich alle Prüfergebnisse im Einklang mit dem ersten Stabilitätskriterium befinden.

2. Verfahren (1) nach Patentanspruch 1, wobei in Schritt d) die Steigerung der ersten Prüffrequenz auf mindestens 130 % des ersten Wertes und die Verringerung der Prüffrequenz auf höchstens 70 % des ersten Wertes erfolgt.

3. Verfahren (1) nach einem der vorhergehenden Patentansprüche, wobei die Verringerung oder Steigerung der Prüffrequenz auf jeweils definierte Werte der ersten Prüffrequenz stufenweise erfolgt.

4. Verfahren nach Patentanspruch 3, wobei die Steigerung der ersten Prüffrequenz in größeren oder kleineren Stufen als die Verringerung der ersten Prüffrequenz erfolgt.

5. Verfahren nach einem der vorhergehenden Patenansprüche 3 und 4, wobei die Verringerung oder Steigerung in voneinander unterschiedlichen und sich verändernden Stufen durchgeführt wird.

6. Verfahren nach einem der vorhergehenden Patentansprüche, wobei die erste Prüffrequenz bis zu einer 100 % Prüfung, also Prüfung jedes Bauteils oder fortwährender Prozessparametererfassung, steigerbar ist.

7. Verfahren (1) nach einem der vorhergehenden Patentansprüche, wobei die Herstellung des Bauteils eine Mehrzahl von Prozessschritten umfasst; wobei das erste Merkmal nach einem ersten Prozessschritt vorliegt und geprüft wird; wobei ein messtechnisch erfassbares zweites Merkmal nach einem, dem ersten Prozessschritt zeitlich nachfolgenden zweiten Prozessschritt vorliegt.

8. Verfahren (1) nach einem der vorhergehenden Patentansprüche, wobei die Verringerung der Prüffrequenz nur bis zu einem definierten Minimum einer Prüffrequenz erfolgt, die nicht null beträgt.

9. Vorrichtung zur Datenverarbeitung, umfassend einen Prozessor, der so konfiguriert ist, dass er das Verfahren nach einem der vorhergehenden Patentansprüche durchführt.
